# EUROPEAN PATENT APPLICATION

(11) **EP 2 431 783 A1**
(43) Date of publication of application: **21.03.2012**
(21) Application number: 10177618.5
(22) Date of filing: 20.09.2010
(51) Int. Cl.: G02B 17/08, G01J 3/44, G01J 3/02, G02B 23/24

(54) **Optical Probe comprising transparent monolithic body with refracting and reflecting surface parts**

(71) Applicant: Nederlandse Organisatie voor Toegepast -Natuurwetenschappelijk Onderzoek TNO, 2628 VK Delft (NL)
(72) Inventor: Ouwerkerk, Bastiaan Robert, 2628 VK Delft (NL); Moddemeijer, Kees, 2628 VK Delft (NL); Sandtke, Marijn, 2628 VK Delft (NL)
(74) Representative: Jansen, Cornelis Marinus

(57) **Abstract**

The optical probe contains a monolithic body (14) of optically transparent material to perform focusing for a plurality of parallel light paths from one or more fibers (10,12) to one or more object points (19). Surface parts (160,164,180,182) of the monolithic body are curved to form lenses (164,182) and/or coated with a reflective coating (160,180). On a fiber side of the monolithic body an opening or openings (168,164) are provided in a reflective coating opposite the tip or tips of the fibers (12,10) to pass light. On the object side of the monolithic body, a coated surface part (180) reflects the light path from the openings back to the fiber side of the monolithic body, from where the light path is reflected towards an aperture on the object side. At least part of the reflecting surfaces is curved to form reflector a plurality of distinct lenses on the same side of the monolithic body.

## Description

### Field of the invention

The invention relates to an optical probe, comprising a bundle of at least one fiber and an optical system between an object side interface of the probe and the tip or tips of the fiber or fibers. The invention relates to a method of illuminating an object and/or measuring light from an object, an optical measurement apparatus and a monolithic body for use in an optical probe.

### Background

W02005060622 shows a probe for Raman spectroscopy. Raman spectroscopy involves illumination of an object with light from a primary fiber and collection of inelastically scattered light back from the object in a secondary fiber. W02005060622 uses a central secondary fiber, with the primary fiber adjacent to it.

W02005060622 proposes to use lenses and mirrors between the tips of the fibers and the object in order to realize a large spot size. A sample lens and a collection lens are used to focus light from the object onto the secondary fiber. The light from the primary fiber is passed to the object through the sample lens, using a small mirror between the sample lens and the collection lens to inject the light on the optical axis of the lenses. The small mirror obstructs only part of the light returning from the object. The light the primary fiber is fed to the small mirror using a short focal length lens to collimate the light and a further mirror to direct the light to the small mirror.

The optical system that is used between the fibers and the object is quite bulky. But the bulkiness makes the optical system unsuitable for use in small sized probes. Moreover the optical system makes the performance of the probe sensitive to temperature.

A pair of articles by H.Rutten et al, titled "Monolitisch telescopisch system" published in Microniek 1997 No 4 pages 104-107 and Microniek 1998 No 1, pages 13-19 describe how an objective for forming an image in photography or video can be manufactured monolithically.

### Summary

Among others, it is an object to provide for an optical probe that comprises an optical system between a bundle of fibers and an object and that requires less volume.

An optical probe according to claim 1 is provided. In this probe a monolithic body of optically transparent material such as glass or a plastic is used to perform focusing for a plurality of parallel light paths. In one embodiment, the probe contains a bundle of optical fibers, the parallel light paths connecting the tips of respective ones of the fibers to a common focus point on the object side of the monolithic body, or to a plurality of focus points in a predetermined spatial relation. In another embodiment the parallel light paths connect the tip of one fiber to a plurality of focus points in a predetermined spatial relation on the object side of the monolithic body.

Surface parts of the monolithic body are curved to form lenses and/or coated with a reflective coating. On a fiber side of the monolithic body an opening or openings are provided in a reflective coating opposite the tip or tips of the fibers to pass light. On the object side of the monolithic body, a coated surface part reflects the light path from the openings back to the fiber side of the monolithic body, from where the light path is reflected towards an aperture on the object side. At least part of the reflecting surfaces is curved to form reflector a plurality of distinct lenses on the same side of the monolithic body. The distinct lenses focus light paths from the object position (or object positions in predetermined relation to each other, for object positions that are not focused onto different fibers using single image formation) via the aperture separately onto a tip of a fiber or respective ones of the tips of each of the fibers at the openings. Thus focusing along a plurality of parallel light paths may be realized with a single element, the monolithic body, for a plurality of fibers to one or more object positions or from one fiber to a plurality of object positions. In an embodiment the object side surface of the monolithic body has a plurality of distinct coated surface parts, each having a curved lens shape to form a respective primary reflector lens. These primary reflector lenses direct the light paths between the openings opposite the fiber tips and the object position or positions independently of one another. The coated surface parts may lie in a ring around the uncoated aperture in the object side surface of the monolithic body.

In an embodiment the reflector lenses formed by first and second coated surface parts with focus distances equal to optical distances from the first coated surface part or parts to the one or more object positions and from the second coated surface part to the tips of the fibers respectively. Thus a parallel beam is realized in the monolithic body between these surface parts, which reduces the sensitivity of the probe to the thickness of the monolithic body.

In an embodiment the object side aperture on the monolithic body has a curved surface, forming a lens. Thus the aperture may be used to focus light that is not focused using the coated surface parts. In addition the aperture may be used to help focus the light paths from the openings opposite the tips of the fibers. This may make it possible to reduce the required curvature of the curved surface parts with reflective coating, or even to use fewer curved surface parts.

In an embodiment the bundle of fibers comprises a further fiber, for example a central fiber, with the earlier mentioned fibers in a ring around it. The fiber side surface of the monolithic body may have a third surface part opposite a tip of the further fiber having a curvature to focus light from the further fiber at a position on the object side from the monolith body in a predetermined relation to the focus positions of the other fibers, for example all at the same position.

Thus, a further light path may be provided with the same probe, using the same monolithic body.

The fibers may be connected to the monolithic body using a cylindrical structure on the fiber side surface of the monolithic body to which the fibers are attached by a glue for example. When a central fiber is used, the cylindrical structure may be at least partly hollow, so that central fiber can pass into it. In an embodiment, the cylindrical structure may be clamped to the monolithic body with a clip.

The probe may be used in an apparatus with one or more light sources and/or light detectors coupled to distal ends of the fibers (with the fibers running from the distal ends to the monolithic body).

In an embodiment the probe is used for Raman spectroscopy, at least one of the fibers being used to supply light to a sample via the monolithic body and at least one of the fibers being to receive inelastically scattered light from the sample via the monolithic body. In other embodiments the probe may be used to supply and/or receive for LIBS (Laser induced breakdown spectroscopy), LIF (Laser induced fluorescence), (N)IR ((Near) infrared spectroscopy), fluorescence spectroscopy, atomic spectroscopy etc.

### Brief description of the drawing

These and other objects and advantageous aspects will become apparent from a description of exemplary embodiments, using the following figure.
Figure 1 shows part of an optical probe
Figure 1a shows a top view of an optical probe part
Figure 2 shows part of an optical probe
Figure 3 shows part of an optical probe

### Detailed description of exemplary embodiments

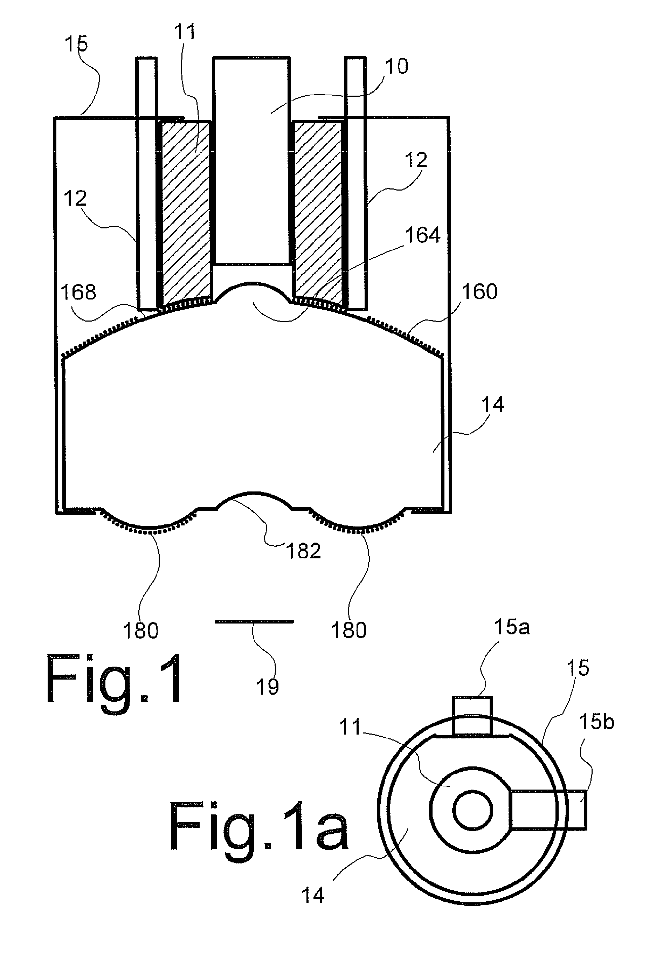

Figure 1 shows part of an optical probe, comprising a central optical fiber 10, a cylinder 11, peripheral optical fibers 12, a probe head that comprises a monolithic body 14 of optically transparent material and a clip 15. The probe may be part of an endoscope for example, or as part of an analysis system, wherein fibers 10, 12 may be coupled to a light source and/or detectors (not shown).

Monolithic body 14 has a fiber side surface and an object side surface. The fiber side surface comprises a first curved surface part 160 and a second curved surface part 164, with mutually different curvature. First curved surface part 160 is covered with a reflective coating (shown as a dotted line), except at openings 168 (only one labeled) opposite the tips of peripheral optical fibers 12. Second surface part 164 is not covered by a reflective coating. Second surface part 164 is transparent, as is first curved surface part 160 at openings 168. Monolithic body 14 may be convex at second surface part 164 (protruding from monolithic body 14).

The object side surface comprises first curved surface parts 180 and a second curved surface part 182. The centers of curvature of first curved surface parts 180 are different from one another and from that of second curved surface part 182. Otherwise, first curved surface parts 180 may have equal curvature. First curved surface parts 180 are covered with a reflective coating (shown as a dotted line). Second surface part 182 is not covered by a reflective coating, so that second surface part 182 is transparent. The surface of monolithic body 14 may be convex (protruding) at first curved surface parts 180 and concave (indented) at second surface part 182. Instead of a concave second surface part 182 a flat surface part, or a convex surface part may be used Use of a concave surface part in the aperture has the advantage that the angle between the surface and the rays to first curved surface part 160 is kept closer to the orthogonal, so that color errors due to dispersion are kept small. Use of a flat surface may help to break the rays so that the distance to the focus point can be changed.

Each first curved surface part 180 on the object side surface of monolithic body 14 acts as a reflector lens for light to or from a respective one of peripheral optical fibers 12. The first curved surface part 160 on the fiber side surface of monolithic body 14 acts a reflector lens to redirect the light to or from the first curved surface parts 180 on the object side surface from or to the same object position 19.

Second curved surface part 182 on the object side surface of monolithic body 14 acts as a refractive lens that cooperates with the first curved surface parts 160, 180 on the object and fiber side surfaces of monolithic body 14. The curvature of second curved surface part 182 on the object side surface of monolithic body 14 and the first curved surface parts 160, 180 on the object and fiber side surfaces of monolithic body 14 cooperate to focus the light path on the object position 19. (As used herein, the words "light path" are used to refer both to a possible path followed by supplied light in one direction along the path and a possible path followed by received light in the opposite direction along the path. In other words, it is used to refer to relations between focal points, irrespective of light direction).

Second surface part 164 on the fiber side surface of monolithic body 14 is located opposite the tip of central optical fiber 10. Second surface part 164 on the fiber side surface of monolithic body 14 acts a refractor lens for light from or to light the tip of central optical fiber 10. Second surface parts 164, 182 on the object and fiber side surfaces of monolithic body 14 cooperate to focus the light path on the object position 19.

Figure 1a shows a top view of an embodiment wherein cylinder 11 and monolithic body 14 are fixed to clip 15 to prevent relative rotation. In this embodiment cylinder 11 and monolithic body 14 have beveled circumferential surface parts. For the sake of illustration, beveled circumferential surface parts are shown at an angle to each other, but they may be provided at the same circumferential angle. Pegs 15a,b (e.g. screws) are attached to clip 15. Clip 15 holds pegs 15a,b in contact with the beveled surface parts of cylinder 11 and monolithic body 14. This prevents relative rotation of cylinder 11 with peripheral optical fibers 12 relative to monolithic body 14. It should be emphasized that this is only an advantageous embodiment. In other embodiments, cylinder 11 and monolithic body 14 may be held in fixed relative rotation by the same peg, or each by a plurality of pegs, or without pegs, for example by gluing. Cylinder 11 and monolithic body 14 may be fixed directly to each other, and/or the peripheral optical fibers 12 may be fixed to monolithic body 14.

Central optical fiber 10 runs through cylinder 11. Cylinder 11 may be made of ceramic material for example. Its end facing monolithic body 14 may be shaped to match the shape of monolithic body 14. The reflective coating on monolithic body 14 may be present on monolithic body 14 between the end of cylinder and monolithic body 14. Peripheral optical fibers 12 run along the outside of cylinder 11. Central optical fiber 10 and peripheral optical fibers 12 may be attached to cylinder 11. They may be glued to it for example.

Clip 15 extends along the length of monolithic body 14 and cylinder 11. Clip may have a cylindrical shape, surrounding the circumference of monolithic body 14 cylinder 11. Clip 15 has flanges clamped against cylinder 11 and monolithic body 14, so that cylinder 11 and monolithic body 14 are clamped against each other. The flanges may have fingers extending between peripheral optical fibers 12, to reach cylinder 11 without interfering with peripheral optical fibers 12. The object side surface of monolithic body 14 may form the object side interface of the probe. Alternatively, other elements (not shown) may be present on the object side, such as a flat and transparent protective plate.

Additional lens or lenses (not shown) may be provided between the tip of central optical fiber 10 and monolithic body 14. In an embodiment, the additional lens or lenses may be fixed in cylinder 11. During assembly the distance between the tip of a central optical fiber 10 and the additional lens or lenses , may be adjusted before central optical fiber 10 is fixed to cylinder 11. The additional lens or lenses may be used to control the location of the focus point on object 16.

Central optical fiber 10, peripheral optical fibers 12 form a bundle of fibers, which may extend any distance beyond clip 15 and cylinder 11. This bundle of fibers may be used for example to supply light that will be focused on an object position 19 (shown symbolically as a line) by means of monolithic body 14 and receive back from the object position. The probe may be part of an endoscope for example, or as part of an analysis system, wherein the distal ends of fibers 10, 12 (away from monolithic body 14) may be coupled to one or more light sources and/or detectors (not shown).

Although an example has been discussed showing a cross section with two peripheral optical fibers 12, it should be appreciated that more than two peripheral optical fibers 12 may be used, or only a single peripheral optical fiber 12. When more than two peripheral optical fibers 12 are used, they may be arranged at discrete positions along a ring at constant radius around the axis of central optical fiber 10. Corresponding openings 168 and first curved surface parts 180 on the object side surface of monolithic body 14 may be used. In another embodiment, more than one ring at different radii the axis of central optical fiber 10 may be used, with peripheral optical fibers 12 at discrete positions on the rings, and corresponding openings 168 and first curved surface parts 180 on the object side. In an embodiment one or more light baffles may be included in monolithic body 14.

In one example of operation, light from a light source (not shown) is supplied through central optical fiber 10, and subsequently through monolithic body 14 to object position 19 and light is received back from object position through peripheral optical fibers 12 via monolithic body 14. The received light may be detected and optionally spectrally resolved in a detector (not shown) for Raman spectroscopy for example.

The light from the light source passes through second surface parts 164, 182 on the object and fiber side surfaces of monolithic body 14, which act to focus the supplied light at object position 19 (optionally an additional discrete lens may be used between the tip of central optical fiber 10 and monolithic body 14 to support focusing). The object position 19 where the light is focused may be a position at the surface of an object, but it may also lie inside an object. Return light passes from object position 19 through monolithic body 14 to peripheral optical fibers 12. The return light passes through second surface part 182 on the object side surface of monolithic body 14, reflects from first surface part 160 on the fiber side surface of monolithic body 14 and subsequently from first surface parts 180 on the object side surface of monolithic body 14. First surface parts 180 on the object side surface of monolithic body 14 operate to focus respective parts of the return light on different ones of peripheral optical fibers 12.

In other examples, the peripheral optical fibers may be used to supply light and the central optical fiber 10 may be used to receive light. In other examples both the central optical fiber 10 and the peripheral optical fibers may used to supply light and/or to receive light. Individual ones of the fibers may be uses both to supply and receive light at the same time.

Although an example has been described wherein the focus of the light paths from the central optical fiber 10 and the peripheral optical fibers 12 is at the same object position 19, it should be appreciated that instead other predetermined relations between the focus points of the light paths may be provided for. In an embodiment, the focus points of the light paths of the peripheral optical fibers 12 may coincide on the object side, but their axial position may be closer that the focus point of the light path of the central optical fiber 10, or vice versa. In another embodiment the focus points of the light paths of the peripheral optical fibers 12 may lie at discrete positions along a ring on the object side, around the focus point of the light path of the central optical fiber 10 on the object side. This may be used to detect light from predetermined relative positions, where the positions need not be at relative positions defined by a single optical imaging.

The focus distance of the lenses formed by second surface parts 164, 182 on the fiber and object side surface of monolithic body 14 define a focus point outside monolithic body 14 at which light from central optical fiber 10 is focused, according to elementary optical principles. Second surface parts 164, 182 on the fiber and object side surface of monolithic body 14 may have spherical or parabolic surface shape for example.

The focus distance of the lenses formed by first surface parts 160, 180 on the fiber and object side surface of monolithic body 14 are selected to provide for focusing at points in predetermined spatial relation to each other and the focus point realized with second surface parts 164, 182, for example all at the same point. First surface parts 160, 180 on the fiber and object side surface of monolithic body 14 form lenses. The focal distances of these lenses may be selected according to elementary optical principles to ensure focus points in the required spatial relations. First surface parts 160, 180 on the fiber and object side surface of monolithic body 14 may have spherical or parabolic surface shape for example, with curvatures selected to provide the required focus distances.

In an embodiment, the focus distances of these lenses are selected to provide for a parallel beam within monolithic body 14. This has the advantage that the effect of thermal expansion of monolithic body 14 on focusing is minimized and that conditions on manufacturing tolerances are relaxed. With a parallel beam it can more reliably be realized that the focus point of the light paths of all peripheral optical fibers 12 have a required predetermined spatial relation. The distance between the end of central optical fiber 10 and monolithic body 14 may be adjusted during manufacture to ensure that the focus point of the light path of central optical fiber also has the required predetermined relation to those of the peripheral optical fibers 12.

In another embodiment, instead of being curved, first surface part 160 on the fiber side surface of monolithic body 14 may be flat comprise a series of flat facets corresponding to respective ones of the first surface parts 180 on the object side surface of monolithic body 14, so that each facet reflects light to a respective one of the first surface parts 180 on the object side surface of monolithic body 14. Alternatively, approximately parallel beams may be realized using a conical first surface part 160 on the fiber side surface of monolithic body 14, or a lens shaped curved surface with a curvature so that the beams remain approximately parallel.

Monolithic body 14 may be made of glass for example, manufactured using a process that comprises machining (e.g. grinding and polishing) and coating its surface with a reflective layer. Monolithic body 14 may have a diameter of between 0.1 and 10 millimeter for example, 7 millimeters for example, and a height between the fiber side and the object side of between 1 and 10 millimeters for example (5 millimeters for example). In an embodiment a set of peripheral optical fibers 12 is used, each with a diameter of 0.125mm, without central optical fibers. When a bundle of three such fibers is used, a monolithic body 14 of 0.3 mm diameter may suffice, for example. In another embodiment monolithic body 14 may be made of optically transparent plastic. For applications involving high intensity light, glass is preferred. Instead of shaping monolithic body 14 by machining, it may be shaped by casting in a mould that defines the shape, or stamping with such a mould, and coating. Injection molding may be used to manufacture plastic monolithic bodies 14.

In an embodiment one or more light baffles may be included in monolithic body 14, for example by machining a cylindrical slot, extending into monolithic body 14 for part of its height around second surface part 182 on the object side of monolithic body 14 and filling this slot with light baffling material. Thus effects of lighting that bypasses the lenses, or scatters, in monolithic body 14 may be reduced.

Although an embodiment has been shown wherein first curved surface part 160 on the fiber side of monolithic body 14 forms a single reflective lens, it should be appreciated that in some alternative embodiments first curved surface part 160 may comprise a plurality of sub-parts that form distinct lenses, e.g. a plurality of curved facets. Each reflective lens may have a different orientation for example, corresponding to the azimuth position of the peripheral optical fiber 12 for which it reflects light. In this case both first curved surface parts 160, 180 on the fiber and object side of monolithic body 14 serve to ensure that light paths from peripheral optical fibers 12 at distinct positions focus at the same position.

In the embodiment illustrated with the figure the first curved surface parts on the object side of monolithic body 14 serve to ensure that light paths from peripheral optical fibers 12 at distinct positions focus at the same position. In a further embodiment the first curved surface part 160 on the fiber side of monolithic body 14 forms a plurality of distinct reflective lenses, and first curved surface part 180 on the object side of monolithic body 14 forms a single reflective lens. In this case the first curved surface parts on the fiber side of monolithic body 14 serve to ensure that light paths from peripheral optical fibers 12 at distinct positions focus at the same position. However, this may make it difficult to realize parallel beams in monolithic body 14.

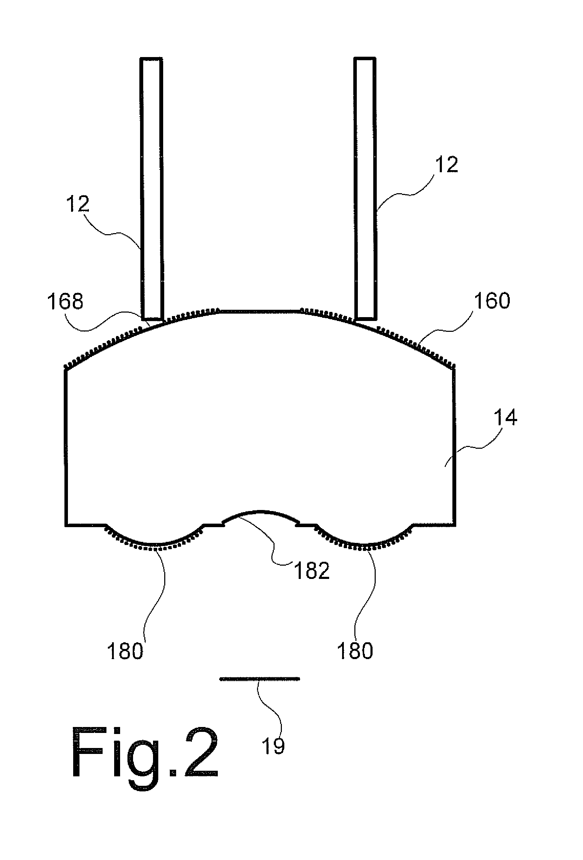

Figure 2 shows an embodiment wherein no central optical fiber 10 is used. In this embodiment only peripheral optical fibers 12 are used to supply and or receive light from a common object position 19. The shaping of the surface parts of the monolithic body that correspond to central optical fiber 10 may be omitted. Second curved surface part 164 on the fiber side of monolithic body 14 plays no role in this case: it may be covered by a reflective coating, to form part of the first surface part 160. Curvature of second curved surface part 182 on the object side of monolithic body 14 may used to assist in focusing of the light paths from the peripheral optical fibers. Alternatively, this second surface part may be flat, focusing being controlled by the first surface parts 160, 180 on the fiber and object side of monolithic body 14.

When central optical fiber 10 is omitted, peripheral optical fibers 12 may be connected to monolithic body 14 using a clip and a cylinder (not shown), as in the embodiment of figure 1. In this case the cylinder 11 need not be hollow. Although embodiments have been shown with a connection between the monolithic body 14 and the peripheral optical fibers 12 (and optionally the central optical fiber 10) using a clip and cylinder, it should be appreciated that other solutions are possible. The cylinder may be glued directly on monolithic body 14. A structure may be glued to the circumferences of monolithic body 14 and cylinder 11 to keep monolithic body 14 and cylinder 11 in fixed relation, instead of using clamping. The cylinder may even be an integral part of monolithic body 14.

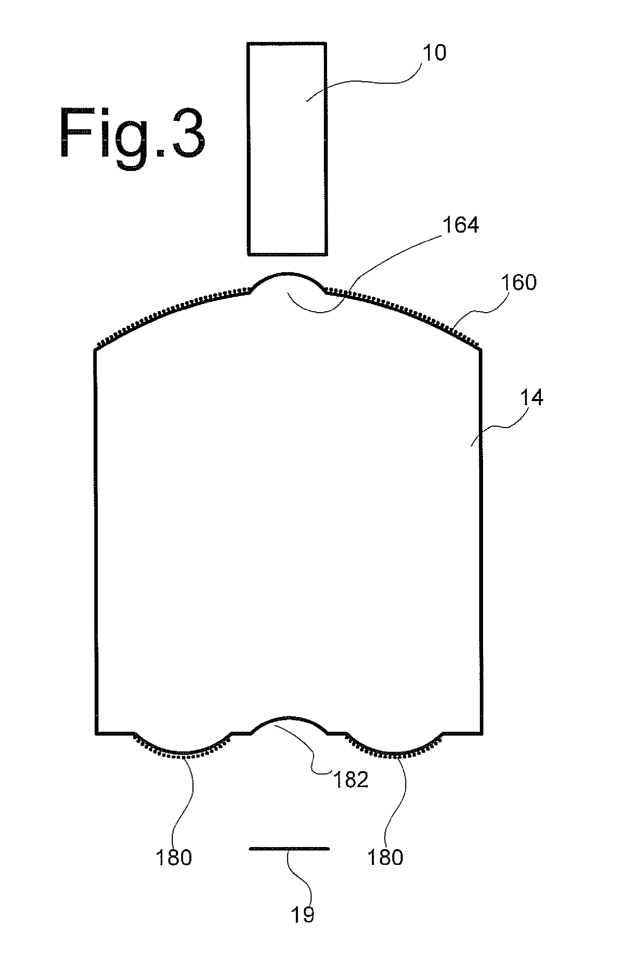

Figure 3 shows an embodiment without peripheral optical fibers 12. In this embodiment, curved surface part on the fiber side of monolithic body 14 and/or on the object side of monolithic body 14 are used to realize a plurality of distinct focus points in a predetermined spatial relationship outside monolithic body 14 on its object side. In this embodiment, monolithic body 14 makes light from central optical fiber 10 diverge to an extent that it reaches first surface parts 180 on the object side of monolithic body 14, which are covered by a layer of reflective material. From there the light is reflected to a first surface part 160 on the fiber side of monolithic body 14, which is also covered by a layer of reflective material. First surface part 160 on the fiber side of monolithic body 14 reflects the light to the aperture 182 on the fiber side of monolithic body 14. As shown, first surface parts 180 on the object side of monolithic body 14 may be curved to form respective distinct reflective lenses, which split the light into mutually different beams, to realize focusing at different focus points.

First surface part 160 on the fiber side may be curved to form a reflective lens that cooperates with the lenses formed by first surface parts 180 on the object side to focus the beams at the different focus points outside monolithic body on its object side. First surface parts 180 on the object side may each be arranged to form a parallel beam in monolithic body, between the first surface parts 160, 180 on the fiber and object side of the body. As shown, this is realized by extending the length of monolithic body 14 sufficiently to allow the light path from central optical fiber 10 to diverge until it reaches the radial position of first surface parts 180 on the object side of monolithic body 14.

A second surface part 164, not covered with a reflective layer, on the fiber side of monolithic body 14 may have curvature different from first surface part 160 on the fiber side, to form a distinct refractive lens that makes light from central optical fiber 10 diverge. A first surface part of monolithic body 14 at aperture 182 on the object side, not covered with a reflective layer, may have curvature different from first surface parts 180 on the object side, to form a distinct refractive lens that helps focusing and divergence. Although a central optical fiber 10 directed at the centre (axis) of monolithic body is shown, it should be understood that instead an off axis fiber may be used.

In other embodiments different combinations of surfaces may be used, as described for the embodiments with peripheral optical fibers. For example, first surface parts 160 on the fiber side of monolithic body 14 may be curved to form respective distinct reflective lenses, in which case first surface parts 180 on the object side of monolithic body 14 may be curved to form respective distinct reflective lenses, or to form one lens. Facets may be provided on the fiber or object side. An alternative option could be to use reflective surface parts that form a single lens on both the fiber side and the object side. Thus only one light path from central optical fiber 10 to one object point would be provided with monolithic body 14. But the use of a plurality of lenses has the advantage that a plurality of distinct parallel light paths can be realized.

The embodiment of figure 3 may be used to focus light from central optical fiber 10 at a plurality of object side points and receive back light from these points, the received back light being returned to central optical fiber 10. In other applications, it may be used to direct light from central optical fiber 10 to the focus points only, for example to induce parallel effects at each focus point, or it may be used to direct light from the focus points to central optical fiber 10 only, to provide for parallel measurement at a plurality of points.

The probe is particularly useful for use in Raman spectroscopy. However, it may be applied to other optical applications as well, for example to LIBS (Laser induced breakdown spectroscopy), LIF (Laser induced fluorescence), (N)IR ((Near) infrared spectroscopy), fluorescence spectroscopy, atomic spectroscopy etc.

## Claims

1. An optical probe, comprising at least one fiber and an optical system between the fiber or fibers and an object side interface of the optical probe, the optical system being configured to focus light from a tip or tips of the at least one fiber onto an object and/or vice versa, the optical system comprising a monolithic body of optically transparent material, having
- a fiber side surface that has at least one first coated surface part, with a first reflective coating on said first coated surface part or parts, the reflective coating leaving an opening or openings opposite the tip or tips of the at least one fiber, and
- an object side surface having at least one second coated surface part, with a further reflective coating on said second coated surface part or parts, leaving an object side aperture, and wherein
- at least one of the first and second surface parts is curved to form a plurality of distinct reflector lenses, configured to focus light paths from one or more object positions at predetermined relative spatial locations via the aperture individually onto the tip or tips of at least one fibers at the openings and/or vice versa.

2. An optical probe according to claim 1, wherein the reflector lenses formed by first and second coated surface parts with focus distances equal to optical distances from the first coated surface part or parts to the one or more object positions and from the second coated surface part to the tip or tips of the at least one fiber respectively.

3. An optical probe according to claim 1 or 2, wherein the second coated surface part or parts lies or lie in a ring around said aperture.

4. An optical probe according to any one of the preceding claims, wherein the object side aperture has a curved surface, forming a lens that cooperates with the first and/or second surface parts to focus the light from the one or more object positions via the aperture onto the respective ones of the tips of each of the fibers at the openings and/or vice versa.

5. An optical probe according to any one of the preceding claims, wherein the at least one fiber comprises a bundle of a plurality of fibers, the reflective coating of the least one first coated surface part of the fiber side surface of the monolithic body leaving openings opposite tips of respective ones of the fibers, said at least one of the first and second surface parts being curved to form reflector lenses configured to function to focus light paths from one or more object positions at predetermined relative spatial locations via the aperture separately onto tip or tips of respective ones of the fibers at the openings and/or vice versa.

6. An optical probe according to claim 5, wherein the reflector lenses are configured to function to focus light from a single object position via the aperture separately onto respective ones of the tips of each of the fibers at the openings and/or vice versa.

7. An optical probe according to claim 5 or 6, wherein the bundle of fibers comprises a further fiber, the fiber side surface of the monolithic body having a third surface part opposite a tip of the further fiber, uncoated so that light can pass through the third surface part, the third surface part having a curvature to form refractor lens configured to focus light from the tip of the further fiber via the aperture onto a further object position in a predetermined spatial relation relative to one or more object positions and/or vice versa.

8. An optical probe according to any one of claims 1 to 4, wherein the distinct reflector lenses are configured to focus light paths from a plurality of separate object positions at predetermined relative spatial locations via the aperture individually onto the tip of a same one of the at least one fibers at the openings and/or vice versa

9. An optical probe according to any one of the preceding claims, wherein the monolithic body has a plurality of reflectively coated second surface parts, each having a curved lens shape to form a respective primary reflector lens, the first surface part having a curved lens shape to form a single secondary reflector lens, the respective primary reflector lenses of the second surface parts cooperating with the single secondary reflector lens to focus light from the tip of one the at least one fibers or tips of respective ones of the fibers onto the one or more object positions or vice versa.

10. An optical probe according to any one of the preceding claims, wherein the monolithic body has a plurality of first surface parts, each having a curved lens shape to form a respective primary reflector lens, the second surface part having a curved lens shape to form a single secondary reflector lens, the respective primary reflector lenses of the second surface parts cooperating with the single secondary reflector lens to focus light from the tip of one the at least one fibers or tips of respective ones of the fibers onto the one or more object positions or vice versa.

11. An optical probe according to any one of the preceding claims, comprising a cylindrical structure attached to the fiber side surface of the monolithic body, the fibers being attached to the cylindrical structure.

12. An optical probe according to claim 11, wherein the cylindrical structure is distinct from the monolithic body, the probe comprising a clamp, with first and second clamp ends, the monolithic body and the cylindrical structure being located between the first and second clamp ends, the first and second clamp ends pressing the monolithic body and the cylindrical structure towards each other.

13. An optical measurement apparatus, comprising an optical probe according to any one of the preceding claims and one or more light sources and./or one or more light detectors coupled to distal ends of the fibers in said bundle.

14. A monolithic body configured as required for the monolithic body of the optical probe according to any one of claims 1 to 10.

15. An optical measuring and/or illumination method, wherein an object is illuminated and/or light is received from an object, the method comprising
- supplying and/or receiving light through at least one optical fiber;
- supplying light from a tip of the fiber onto an object and/or vice versa, through a monolithic body of optically transparent material, via an opening or openings in a reflective coating of a first surface part of the monolithic body opposite the tips of the at least one of the fibers on a fibber side of the monolithic body, furthermore via a reflective coating of a second surface part of the monolithic body on an object side of the body, furthermore via the reflective coating of the first coated surface part of the monolithic body and furthermore via an object side aperture on the object side of the body that is uncovered by the reflective coating of the second surface part,
- focusing the light by means of surface curvature of at least one of the first and second surface parts of the monolithic body, the curvature defining a plurality of distinct reflector lenses, that focus light paths from one or more object positions at predetermined relative spatial locations via the aperture individually onto the tip or tips of the fibers at the openings and/or vice versa.
